# EUROPEAN PATENT SPECIFICATION

(11) **EP 2 739 706 B1**
(45) Date of publication and mention of the grant of the patent: **30.03.2016**
(21) Application number: 11870491.5
(22) Date of filing: 01.08.2011
(51) Int. Cl.: C10B 53/02, C10B 19/00, C10B 57/18, H05B 6/78

(54) **NOVEL MICROWAVE ASSISTED FLASH PYROLYSIS SYSTEM AND METHOD THEREOF**
NEUES MIKROWELLENUNTERSTÜTZTES FLASH-PYROLYSESYSTEM UND VERFAHREN DAFÜR
NOUVEAU SYSTÈME DE PYROLYSE ÉCLAIR ASSISTÉE PAR MICRO-ONDES ET PROCÉDÉ CORRESPONDANT

(43) Date of publication of application: 11.06.2014
(73) Proprietor: Scandinavian Biofuel Company AS, 0125 Oslo (NO); Phase Transition Energy Limited, Hong Kong (CN)
(72) Inventor: KASIN, Kjell Ivar, 3675 Notodden (NO)
(74) Representative: Chaillot, Geneviève
(86) International application number: PCT/CN2011/077887
(87) International publication number: WO 2013/016866

(56) References cited:
- WO-A1-2006/057563
- WO-A1-2011/004172
- CN-A- 101 440 290
- DE-A1-102009 033 216
- US-A- 5 366 595
- US-A1- 2009 000 938
- US-B1- 6 693 265

## Description

### TECHNICAL FIELD OF THE INVENTION

The invention relates to the application of microwave assisted flash pyrolysis to waste or biomass to reclaim matter or energy from that waste or biomass.

### BACKGROUND OF THE INVENTION

The recycling of different materials and the conversion of the energy contents of waste or biomass becomes ever more relevant and the target of large scale investments, private as well as public. The procedure used normally is to pre-sort those materials found in the municipal waste, which may be recycled. What remains are materials that may be converted into energy through, for example, incineration.

The problem of waste accumulation grows steadily. It is expensive both in terms of collection costs and fees charged, and it is particularly unacceptable in terms of the valuable resources that are wasted.

Incineration is a common method for retrieving energy from waste that cannot be recycled. The energy is usually converted into heat in the form of hot water or steam that subsequently may replace 'nobler' forms of energy.

Hierarchically, electricity in the form of alternating current is the most valuable form of energy, as it may, at low cost, be converted into practically any other form of energy.

The cost of converting the energy contents of waste into electric power through incineration is, however, very high, usually requiring large plants if conversion is to yield a good financial return. The high costs are the result particularly of very strict public regulations regarding the release of polluting emissions into the atmosphere.

Pyrolysis is known traditionally as the conventional retort dry distillation process utilizing an external source of heat, sometimes combined with partial combustion of the contents in the retort. Examples of such processes are the production of wood-tar/charcoal and coke from wood and coals respectively. In modern plants, pyrolysis may be best known as what the petrochemical industry refers to as 'cracking.'

Even after the invention of the magnetron in 1921, which used radio tubes to create the microwaves (MW), it took a quarter of a century before MW generators reached the market and came into practical use. In the post-WWII period, MW processes have found multiple applications within industries and in private households.

### THE PRIOR ART OF MW TECHNOLOGY

The known as the prior art of MW technology is the process in material pyrolysis. Pyrolysis converts waste into electricity and other energies smaller units at a precisely controlled temperature, as dry distillation or thermolysis. Through microwave pyrolysis (MWP) process, the waste could be destroyed into non-condensing volatile gas, liquids, carbon, metals and ashes . MWP has been widely used in (1) the sterilizing and /or destruction of infectious material; (2) the sterilizing and /or decomposition of liquid organic waste; (3) recovering of metals, salts or minerals; (4) recycling and recovering of waste components found in municipal wastes; (5) recycling of chemicals and energy from plastics and rubber and (6) energy production from compressed agricultural waste. DE10 2009 033 216 discloses an apparatus and a process for cracking molecules from solid feed material into light oil and gaseous product.

### SUMMARY OF THE INVENTION

The present invention provides a system to carry out microwave assisted rapid or 'flash' pyrolysis in an industrial scale. The present invention provides a microwave-assisted flash pyrolysis system, comprising at least one microwave generator connected to a chamber. The chamber comprises: at least one feedstock inlet, at least one baffle plate, a microwave-transparent rotating window, and at least one microwave inlet, at least one wet gas outlet, and at least one dry-end product outlet. In addition, the feedstock inlet for introducing feedstocks to the microwave-transparent rotating window is disposed over the microwave-transparent rotating window and in front of the first baffle plate. The first baffle plate is used for leveling out the feedstocks on the microwave-transparent rotating window and separating the chamber into different pyrolysis sectors in which flash pyrolysis is to take place. In some embodiments, the microwave-assisted flash pyrolysis system could comprise more than one baffle plate (hereinafter the 'first baffle plate' and 'second baffle plate'). If the system have more than one baffle plates, second baffle plate could further defining the pyrolysis sector together with the first baffle plate. The baffle plates (first and second baffle plate) are disposed over the microwave-transparent rotating window, and there is a gap between the first baffle plate and microwave-transparent rotating window. The height of the gap is adjustable and used for determining the thickness of input feedstocks.

The microwave-transparent rotating window moves the input feedstocks through the gap and into the pyrolysis sector. The pyrolysis sector is disposed over the microwave inlet. The microwave inlet is connected to the microwave generator for introducing microwave energy upward into the pyrolysis sector that is disposed over the microwave-transparent rotating window and limiting the microwave energy between the first baffle plate and the dry-end product outlet (or second baffle plate). The wet gas outlet is connected to a gas collection unit for collecting wet pyrolysis gas from the pyrolysis sector, and the wet gas outlet is disposed over the microwave-transparent rotating window. The dry-end product outlet is connected to the chamber for collecting pyrolyzed dry-end products from the microwave-transparent rotating window. The atmosphere inside the chamber consists of an inert atmosphere, and no oxygen is added to the chamber.

For operating the microwave assisted pyrolysis system of the present invention, a method for flash-pyrolyzing a feedstock by using such microwave assisted pyrolysis system is provided. The method comprises: introducing a feedstock through a feedstock inlet into a chamber; letting a microwave-transparent rotating window to move the feedstock through a gap into a pyrolysis sector; pyrolyzing the feedstock by an upward direction of microwave energy through the microwave-transparent rotating window coming from a microwave inlet, wherein a wet pyrolysis gas and a pyrolyzed dry-end product will be produced by a flash pyrolysis process; collecting the wet pyrolysis gas by a gas collection unit through a wet gas outlet; and transporting the pyrolyzed dry-end product to a dry-end product outlet; wherein the pyrolyzed dry-end product is transported out of the chamber.

Through the present invention, a microwave pyrolysis system must have a stronger microwave energy zone compared to ordinary microwave pyrolysis so that microwave assisted flash pyrolysis can be well carried out. The pyrolysis gas generated from a microwave assisted flash pyrolysis system of the present invention can contain less carbon hydrides.

Next, the details of the embodiments of the present invention will be given.

### BRIEF DESCRIPTION OF THE DRAWINGS

Figures 1(a), 1(b) and 1(c) show some embodiments of the present invention.
Figures 2(a) and 2(b) show tuning structures of some embodiments of the present invention.
Figures 3(a), 3(b), and 3(c) show gas collector structures of some embodiments of the present invention.
Figure 4 shows a path of pyrolysis gas leaving the chamber for some embodiments of the present invention.
Figures 5(a), 5(b) and 5(c) show a side view that how a microwave-transparent rotating window is operating for some embodiments of the present invention.
Figures 6(a), 6(b) and 6(c) show different types of microwave-transparent rotating window used in the present invention.
Figures 7(a), 7(b) and 7(c) show a top view that how a microwave-transparent rotating window is operating for some embodiments of the present invention..
Figures 8(a), 8(b), 8(c) and 8(d) show one kind of first baffle plate used in some embodiments of the present invention.
Figures 9(a), 9(b) and 9(c) show one kind of first baffle plate used in some embodiments of the present invention.
Figure 10 shows one kind of second baffle plate used in some embodiments of the present invention.
Figures 11(a), 11 (b), 11 (c) and 11 (d) show one kind of second baffle plate used in some embodiments of the present invention.
Figures 12(a), 12(b) and 12(c) show some kinds of tuning plate used in some embodiments of the present invention.
Figures 13(a), 13(b), 13(c), 13(d) and 13(e) show some kinds of tuning plate used in some embodiments of the present invention.
Figures 14(a) and 14(b) show some kinds of tuning plate used in some embodiments of the present invention.
Figures 15(a), 15(b) and 15(c) show some kinds of leveling mechanism used in some embodiments of the present invention.
Figure 16 shows a leveling mechanism of one embodiment of the present invention.
Figures 17(a) and 17(b) show one kind of feedstock inlet used in some embodiments of the present invention.
Figures 18(a), 18(b), 18(c) and 18(d) show some kinds of feedstock inlet used in some embodiments of the present invention.
Figures 19 show one kind of feedstock inlet used in some embodiments of the present invention.
Figures 20(a) and 20(b) show some kinds of feedstock inlet used in some embodiments of the present invention.
Figures 21(a), 21(b) and 21(c) show some kinds of microwave inlet used in some embodiments of the present invention.
Figure 22 shows some kinds of microwave generator used in some embodiments of the present invention.
Figures 23(a) and 23(b) show some kinds of extractor used in some embodiments of the present invention.
Figure 24 shows one embodiment of the present invention.
Figure 25 shows one embodiment of the present invention.
Figure 26 shows one embodiment of the present invention.

### DETAILED DESCRIPTION OF THE INVENTION

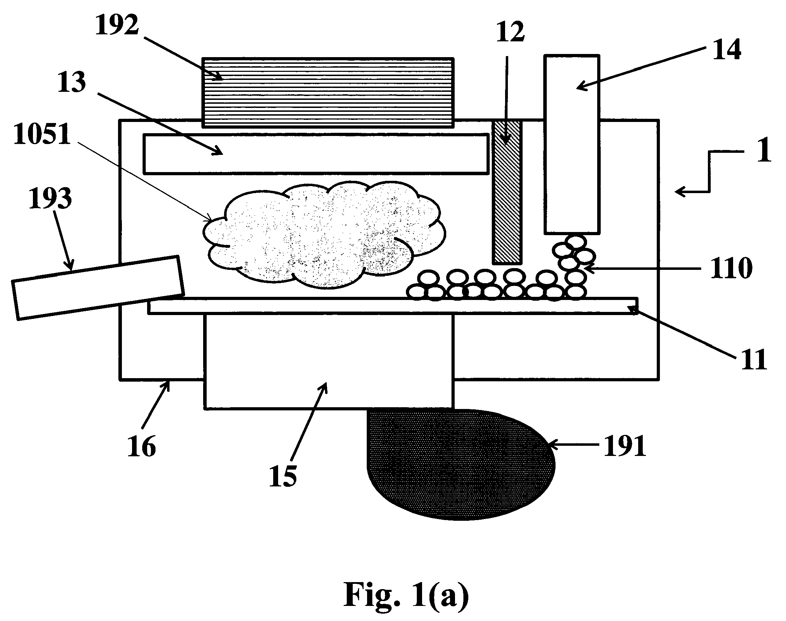

The present invention provides a microwave assisted flash pyrolysis system **1** as shown in Fig. **1(a)****.** The microwave assisted flash pyrolysis system **1** comprises at least one microwave generator **191** and a chamber **16.** The chamber **16** comprises: at least one feedstock inlet **14,** at least one first baffle plate **12,** a microwave-transparent rotating window **11,** and at least one microwave inlet **15,** at least one wet gas outlet **192,** and at least one dry-end product outlet **193.**

As shown in Fig. **1(a)****,** the feedstock inlet **14** is used for introducing feedstocks **110** to the microwave-transparent rotating window **11,** and the feedstock inlet **14** is disposed over the microwave-transparent rotating window **11** and in front of the first baffle plate **12.**

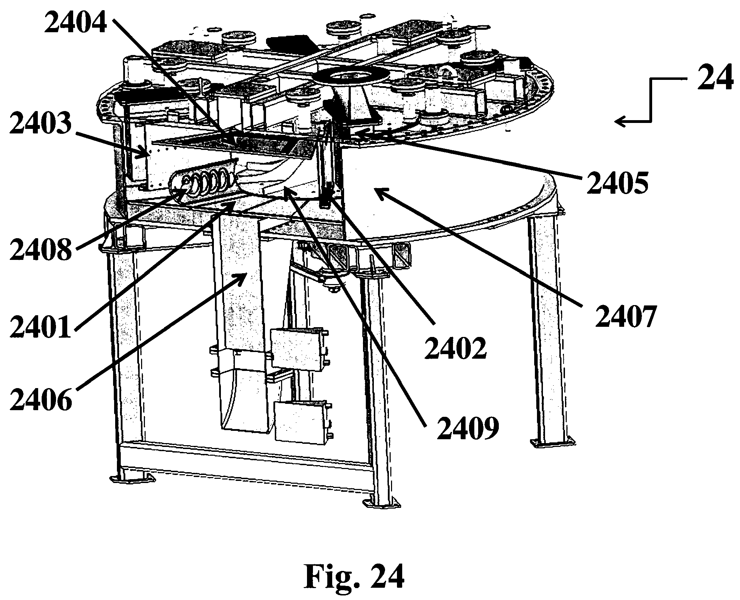

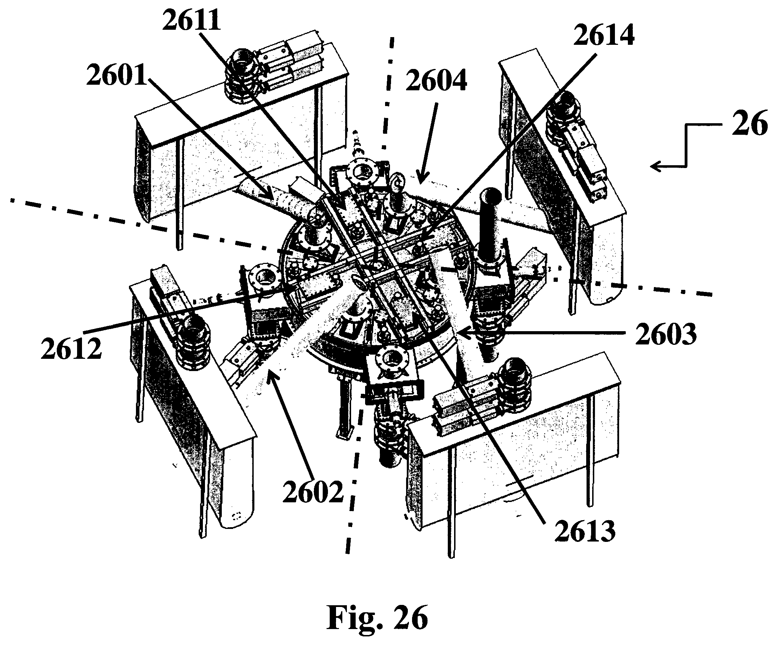

The first baffle plate **12** is used for leveling out the feedstocks **110** on the microwave-transparent rotating window **11.** As shown in Figs. **24** and **26****,** the first baffle plate **2402** is used for separating the chamber **2407** into different pyrolysis sectors **2611, 2612, 2613** and **2614** in which flash pyrolysis is to take place.

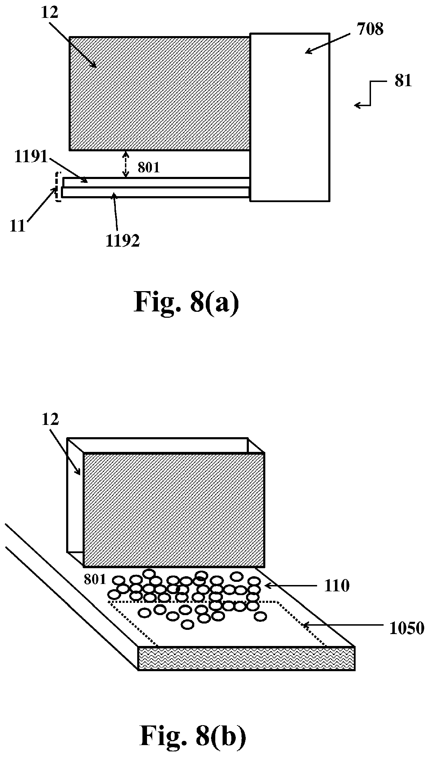

As shown in Fig. **1(a)****,** the first baffle plate **12** is disposed over the microwave-transparent rotating window **11,** and there is a gap **801** (as shown in Fig. **8(a)**) between the first baffle plate **12** and microwave-transparent rotating window **11.** The height of the gap **801** is adjustable, and the height value is used for determining the thickness of input feedstocks **110.**

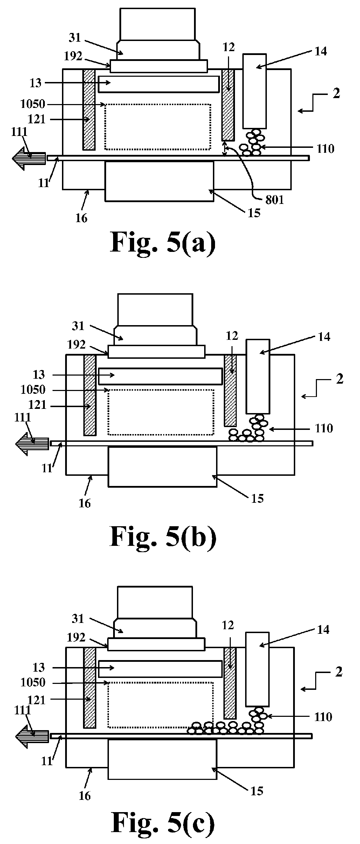

Please refer to Figs. **5(a), 5(b)** and **5(c)****,** where the microwave-transparent rotating window **11** moves the input feedstocks **110** through the gap **801.** The microwave-transparent rotating window **11** conveys the feedstocks **110** into the pyrolysis sector 1050. In addition, the pyrolysis sector **1050** will be formed over the microwave inlet **15**

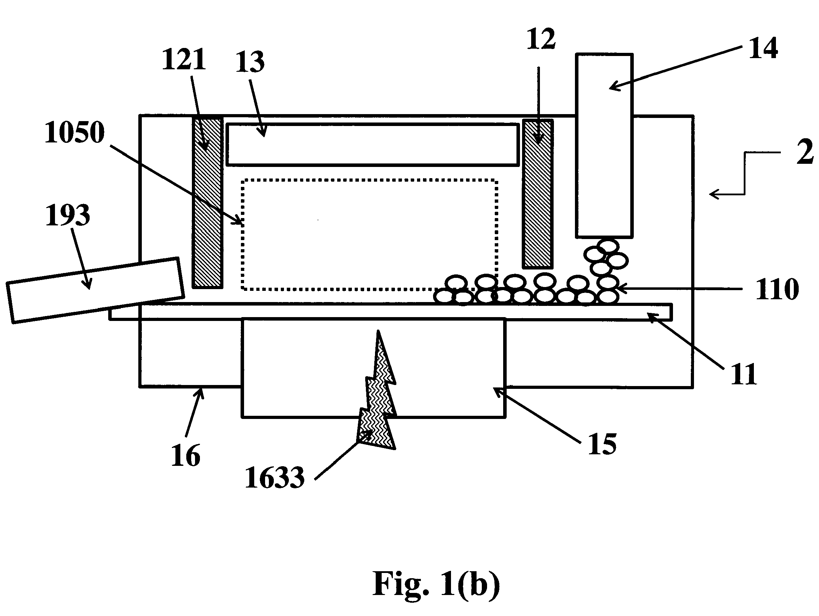

Please refer to Fig. **1(a)** again. The microwave inlet **15** is connected to the microwave generator **191,** and is used for introducing microwave energy upward (flash arrow **1633,** as shown in Fig. **1(b)****)** into the pyrolysis sector **1050** that is disposed over the microwave-transparent rotating window **11.** The microwave energy **1051** could be limited between the first baffle plate **12** and the dry-end product outlet **193,** as shown in Fig. **1(a)****.**

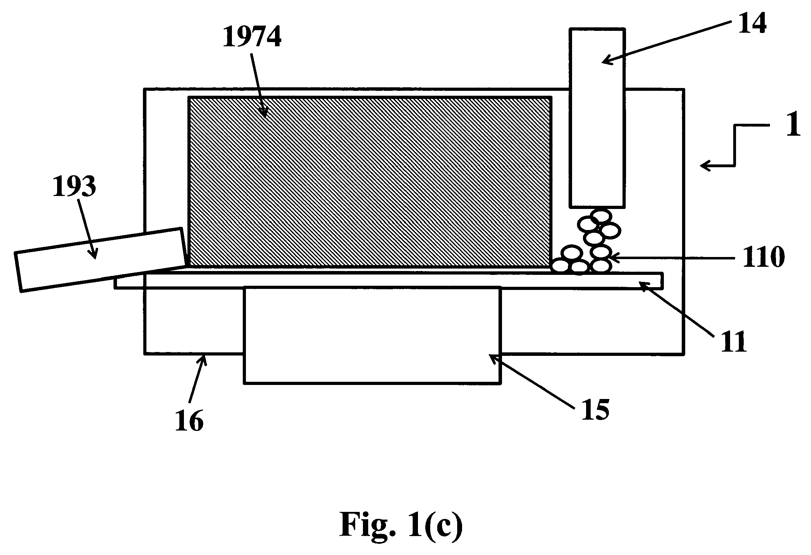

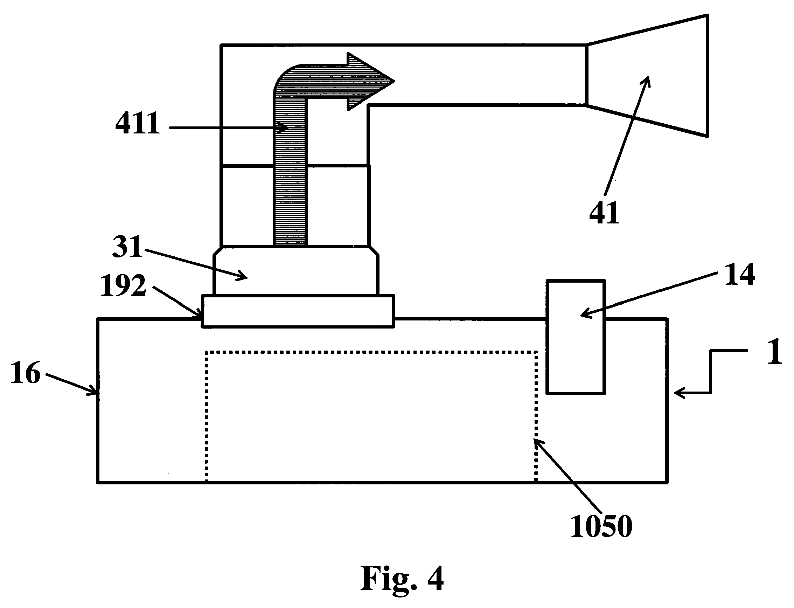

Please refer to Fig. **4****,** where the wet gas outlet **192** is connected to a gas collection unit **41** for collecting wet gas from the pyrolysis sector **1050.** Please refer to Fig. **1** again. The wet gas outlet **192** is disposed over the microwave-transparent rotating window **11.**

It should be noted that in some embodiments, the atmosphere inside the chamber **16** consists of an inert atmosphere, and no oxygen is added to the chamber **16.**

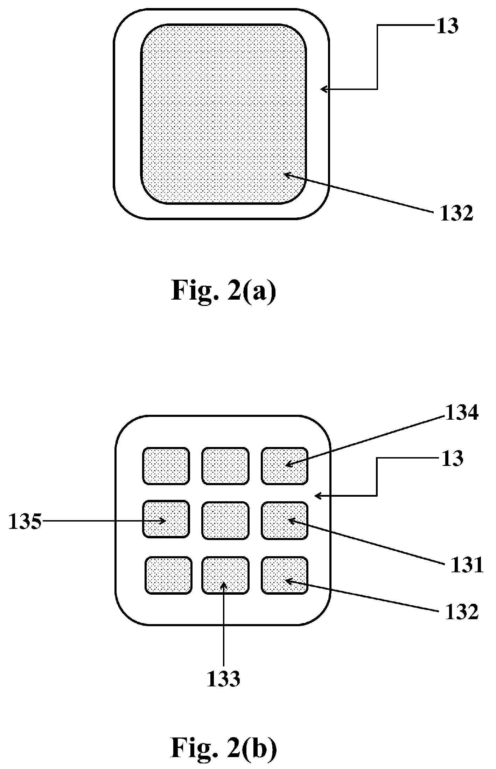

In other embodiments, as shown in Fig. 1(b), the microwave assisted flash pyrolysis system **2** could further have another baffle plate, such as a second baffle plate **121.** Said second baffle plate **121** could work with the first baffle plate **12** to further define the pyrolysis sector **1050.** The second baffle plate **121** is disposed over the microwave-transparent rotating window **11** and between the first baffle plate **12** and the dry-end product outlet **193.The** tuning plate **13** shown in Figs. **1(a)** and **1(b)** has at least one hole **132,** as shown in Fig. **2(a)****.** Alternatively, the tuning plate **13** may has many holes **131,132,133,134,135,** as shown in Fig. **2(b)****.** The hole **132** is designed to free the wet pyrolysis gas generated during the microwave assisted flash pyrolysis.

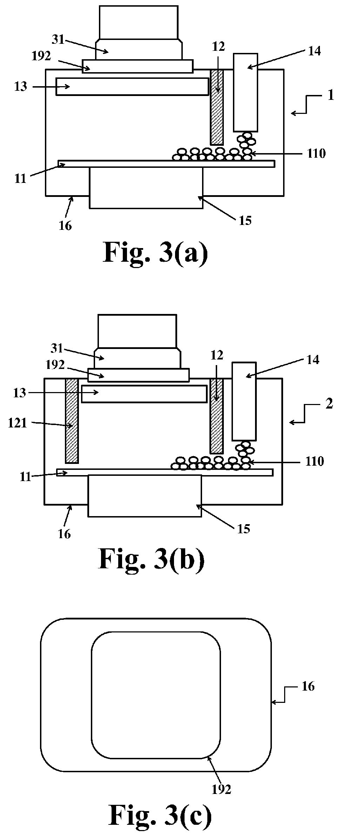

As shown in Figs. **3(a), 3(b)** and **3(c)****,** the microwave assisted flash pyrolysis system **1** or **2** of the present invention further comprises a tube **31.** The tube 31 is connected to the chamber 16 through wet gas outlet**192.**

As shown in Fig. **1(a)** and Fig. **4****,** the microwave assisted flash pyrolysis system **1** further comprises a gas collection unit **41.** The gas collection unit **41** can directly connect the wet gas outlet **192** as shown in Fig. 1. The gas collection unit **41** can also connect the wet gas outlet **192** through a tube **31** as shown in Fig. **4****.** The arrow sign **411** in Fig. **4** expresses the direction of pyrolysis gas leaving the chamber **16** after microwave assisted flash pyrolysis. The pyrolysis gas will be collected by the gas collection unit **41** and transported away from the flash pyrolysis sector **1050** (or chamber **16**)**,** the pyrolysis gas will be treated separately in a next step for further being used to generate energy.

The mechanism of the microwave-transparent rotating window **11** is illustrated in Fig. **5(a), (b)** and **(c)****.** The same idea can be applicable to the system **1** as shown in Fig. **1(a)** that shows a microwave assisted flash pyrolysis system **1** with a first baffle plate **12.**

In Fig. **5(a)****,** feedstock objects **110** are being dropped onto the microwave-transparent rotating window **11** as the microwave-transparent rotating window **11** is moving clockwise, from the right to the left (seen from the front) as the arrow **111** expresses. Figs. **5(b)** and **5(c)** show that the feedstock objects **110** are carried and moved in the same direction on the moving microwave-transparent rotating window **11.**

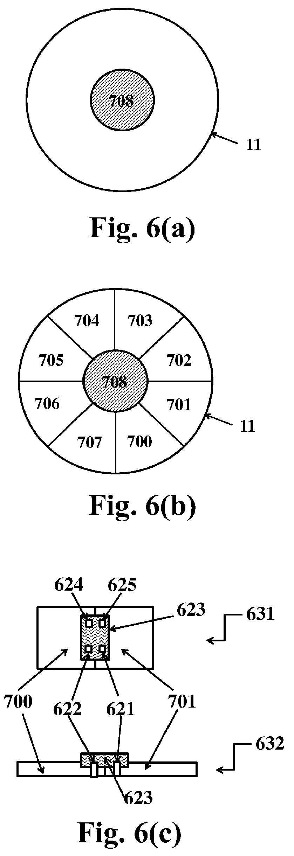

The present invention provides several types of microwave-transparent rotating window **11.** Fig. **6(a)** shows a one-body shape, jointless design of microwave-transparent rotating window **11.** Fig. **6(b)** shows another design of microwave-transparent rotating window **11.** The microwave-transparent rotating window **11** includes several plates **(700, 701, 702, 703, 704, 705, 706 and 707). 631** and **632** in Fig. **6(c)** indicates the top and side view of the plate, respectively. Fig. **6(c)** further shows how the plates may be jointed, or mechanically connected. For example, the plate **700** and the plate **701** are connected mechanically by a joint mechanism. The joint mechanism comprises a frame **623** and four sticks **(621, 622, 624,** and **625).** The two sticks **622, 624** are inserted into the plate **700,** and the other two sticks **621, 625** are inserted into the plate **701.**

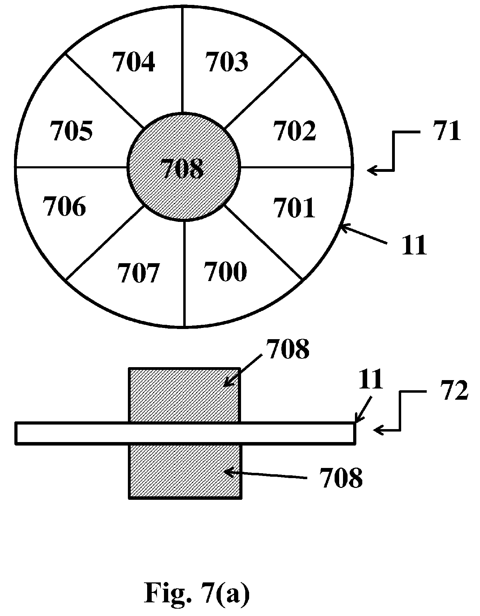

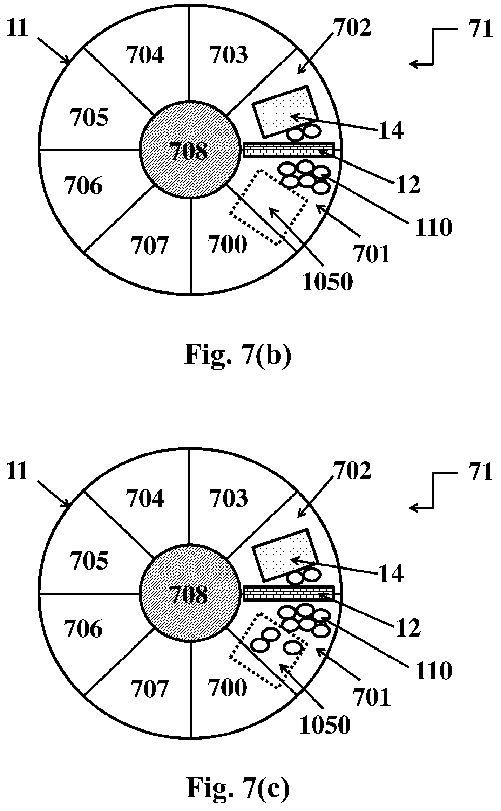

Figs. **7(a)****,** **7(b)** and **7(c)** show a rotating mechanism of a microwave-transparent rotating window **11.** Fig. **7(a)** shows the top view **71** of the mechanism and the side view **72** of the mechanism. The mechanism also includes a shaft **708** (or, namely, an axis **708),** and the microwave-transparent rotating window **11** rotates around the center of the shaft **708.**

In other words, the microwave-assisted flash pyrolysis system of the present invention could further comprise a shaft **708,** and the shaft **708** is disposed on a center of the microwave-transparent rotating window **11.** Fig. **7(a)****,** **7(b)** and **7(c)** show a rotating mechanism that is part of the microwave-assisted flash pyrolysis system of the present invention in some embodiments, and the rotating mechanism enables the microwave-transparent rotating window **11** to rotate. It should be noted that any suitable rotation mechanism could be applied to the present invention.

Fig. **7(b)** illustrates the operation of the microwave-transparent rotating window **11** mechanism. A feedstock inlet **14** provides feedstock objects **110** onto a microwave-transparent rotating window **11.** That is, the feedstock objects **110** will be left on the microwave-transparent rotating window **11.** Please refer to Fig. **7(c)****.** As the microwave-transparent rotating window **11** rotates, the feedstock objects **110** are carried and moved to a pyrolysis sector **1050** (marked by a dashed line in Figs. **7(b)** and 7(c)) that is right above a microwave inlet **15** (in Figs. **1(b)****,** **5(a), 5(b)** and **5(c)****).**

The microwave assisted flash pyrolysis system needs microwave-transparent windows to shield the microwave equipment from damage. In the mean time, said microwave-transparent windows need to be a 'window' for introducing the microwave into chamber. Here, the microwave-transparent rotating window performs as a shield and window to microwave, where microwave energy generated by microwave generator could transmit through the microwave-transparent rotating window. Therefore, the microwave-transparent rotating windows could be composed of different materials, plates or layers to shield the microwave equipment from damage and introduce the microwave into chamber.

In some embodiments, as shown in Fig. **8(a)****,** the microwave-transparent rotating window **11,** used in the present invention could comprise one or more microwave transparent materials, plates or layers **1191** and **1192.** The top layer **1191** could function as a heat-transfer barrier preventing thermal shock to the microwave-transparent rotating window **11.** The bottom layer **1192** could function as a microwave transparent feedstock-carrying device. The materials used for the top layer **1191** include, but are not limited to, glass, boron nitride (BN), or alumina (Al₂O₃) or other microwave transparent materials that could resist a certain amount of heat or temperature. The materials used for the bottom layer **1192** include, but are not limited to, alumina or other microwave transparent material that has a certain physical strength, at least strength enough to carry the amount of weight represented by the feedstock placed at top of it.

In addition, the top layer **1191** of each plate of the microwave-transparent rotating window, mentioned above could be composed of ceramic materials. The selection of workable ceramic materials follows the requirements as follows:
- Microwave-transparent (meaning microwave could pass through such material);
- Thermally resistant;
- Thermally chock resistant;
- Easily machine-able;
- Non-porous (to not accumulate e.g. char which would cause thermal runaway and excess heating);
- Inexpensive and readily available.

It should be noted that not all requirements have to exist coincidentally. The purposes of choosing the right materials includes preventing the plate from being cracked due to hot spots generated throughout the microwave assisted flash pyrolysis.

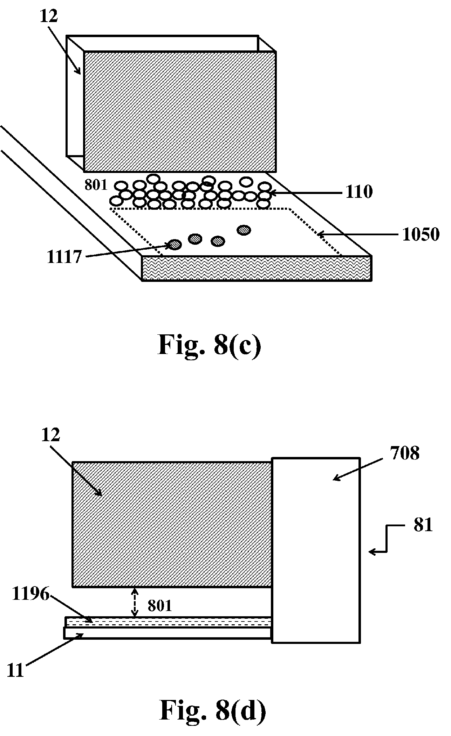

As shown in Fig. **8(d)****,** in some embodiments, the microwave-assisted flash pyrolysis system of the present invention could further comprise a microwave-transparent plate **1196** that is resistant to thermal shock if the microwave-transparent rotating window is composed of one material, plate or layer which is not resistant to thermal shock. The microwave-transparent plate **1196** is disposed on the microwave-transparent rotating window **11.**

The present invention also provides more details about a first baffle plate **12.** The first baffle plate **12** is placed above the microwave-transparent rotating window **11.** Please refer to Fig. **8(a)** that illustrates the side view **81** of a first baffle plate **12** in terms of its relative locations to a shaft **708** and the microwave-transparent rotating window **11.** The distance of gap **801** between the bottom of the first baffle plate **12** and the microwave-transparent rotating window **11,** is decided by a rule regarding focus and penetration depth (into the feedstock) of the microwave energy to maximize the reflection of microwaves through the gap **801,** as shown in Fig. **8(a)****,** should be minimized so as to meet any energy efficiency requirement desired by a user of the present invention.

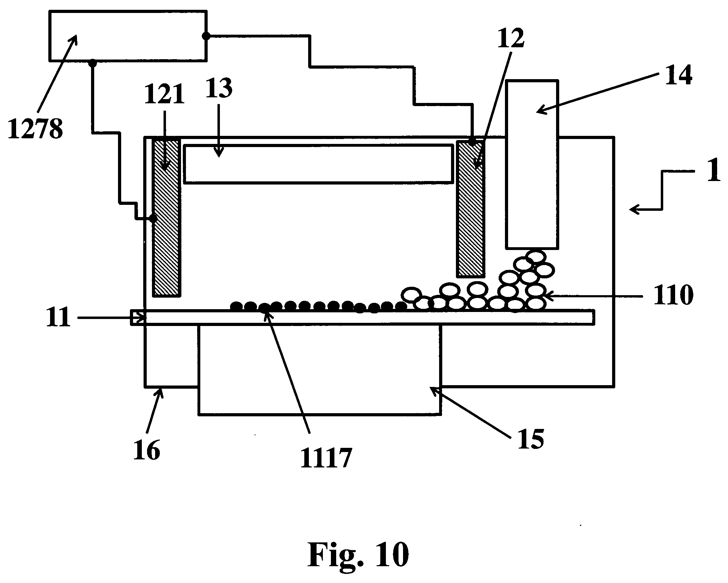

Fig. **8(b)** illustrates a structure of a first baffle plate **12.** Feedstock objects **110** pass through a gap **801,** and reach a microwave assisted pyrolysis sector **1050** (marked by a dashed line). In the pyrolysis sector **1050,** microwave assisted flash pyrolysis is carried out over the feedstock objects **110.** Please refer to Fig. **8(c)** and **Fig. 10****.** If the microwave energy is dense and strong enough, all feedstock objects **110** will be heated and transformed into wet pyrolysis gas and chars **1117** in a quite short pryolysis time.

In some embodiments, the microwave-assisted flash pyrolysis system of the present invention has the first baffle plate **12** and second baffle plate **121** that comprise at least one gas nozzle for introducing inert gases. The idea is described as follows.

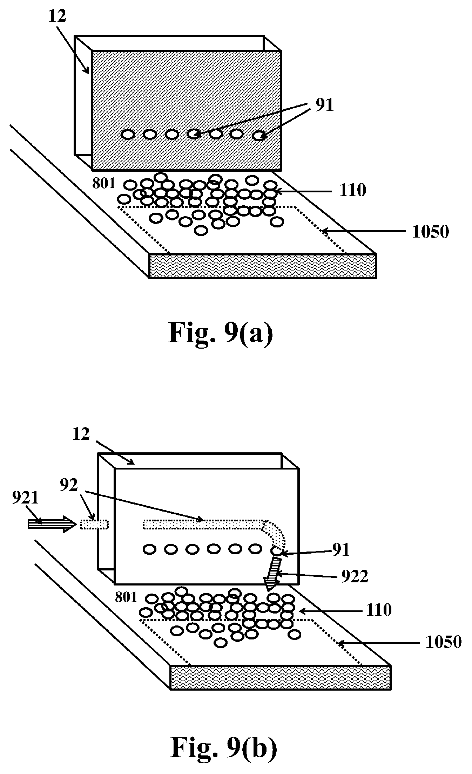

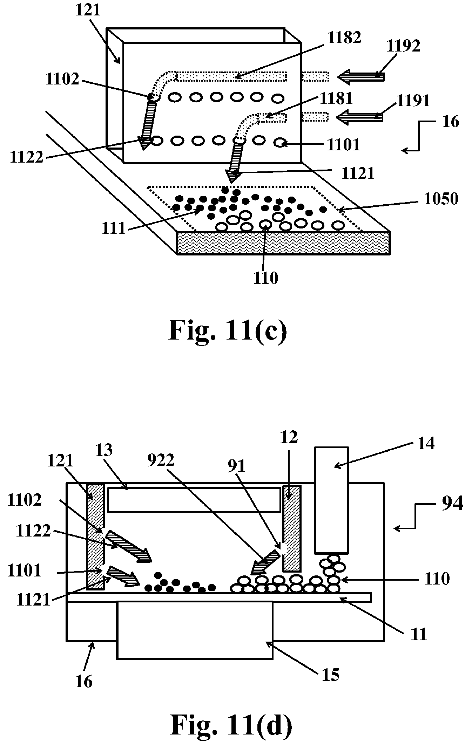

To make microwave pyrolysis more complete, the present invention provides a solution where a first baffle plate **12** has at least one gas inlet **91,** as shown in Fig. **9(a)** and **11(d)****.** In Fig. **9(a)****,** a first baffle plate **12** has more than one gas inlets **91.** But, in some embodiments, a first baffle plate **12** could have only one gas inlet **91.**

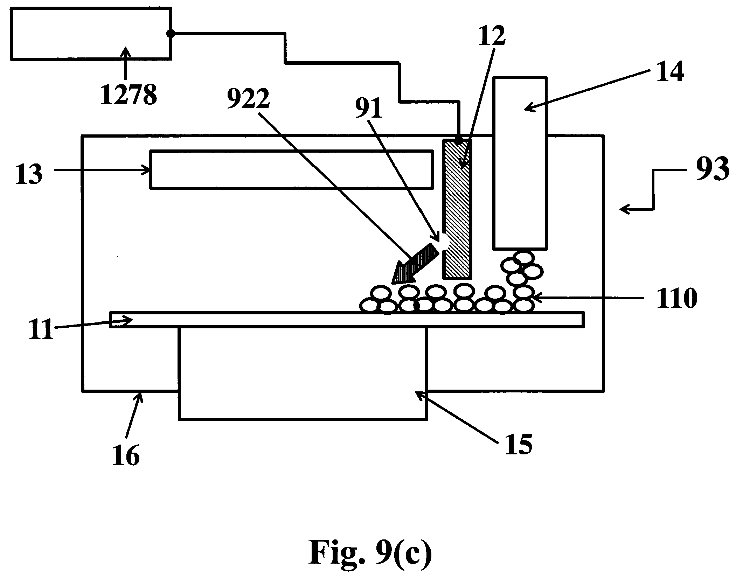

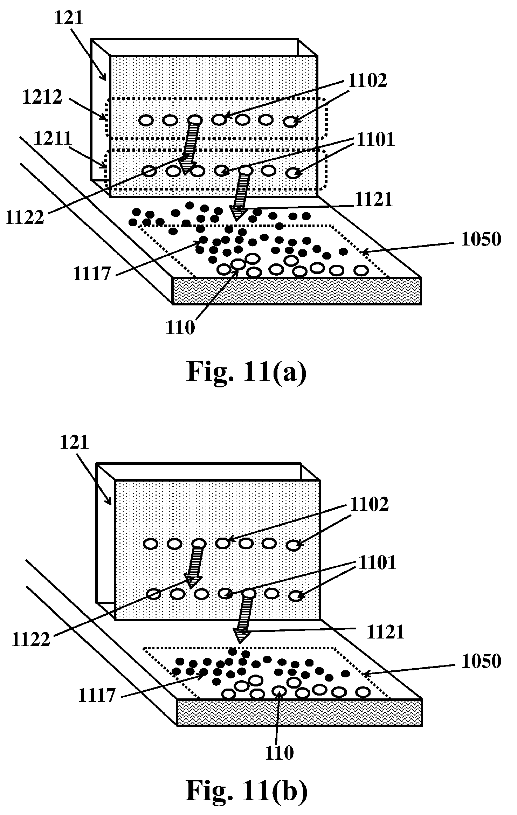

Through a gas inlet **91,** inert gas can flow onto the microwave assisted pyrolysis sector 1050 to mix with the feedstock objects **110** while microwave assisted pyrolysis is going on. Fig. **9(b)** shows an exemplary design of a first baffle plate **12** having a gas inlet **91.** Inside the first baffle plate **12** is a gas tube **92.** The gas tube **92** will direct inert gas from one end of the gas tube **92** to a corresponding gas inlet **91.** Two arrows **921, 922** show the gas flow direction. Fig. **9(c)** shows a side view **93** of how inert gas injection is operating in terms of what is described according to Fig. **9(b)****.** The present invention also provides more details about a second baffle plate **121.** As shown in Fig. **11(a)****,** a second baffle plate **121** used in the present invention could further has one first gas inlet **1101** and one second gas inlet **1102.** The first gas inlet **1101** is disposed near one end **1211** of the second baffle plate **121,** while the second gas inlet **1102** is disposed near a middle region **1212** of the second baffle plate **121.**

The purposes of the second gas inlet **1102** include providing a gas flow **1122** to cool down the hot spots occurring on the microwave-transparent rotating window **11.** The purposes of the first gas inlet **1101** include providing a gas flow **1121** to clean the microwave-transparent rotating window **11** while the microwave-transparent rotating window **11** is approaching the second baffle plate **121.**

Figs. **11(a)** and **(b)** express the idea of how a first gas inlet **1101** cleans the microwave-transparent rotating window **11.** In Fig. **11(a)****,** chars **1117** is often the dry end product of the microwave assisted flash pyrolysis of feedstock objects **110.** The chars **1117** are leaving the microwave assisted pyrolysis sector **1050,** and moving toward to a second baffle plate **121.** As the chars **1117** are approaching the second baffle plate **121,** a gas flow **1121** will leave the first gas inlet **1101,** and blow into the chars **1117** and towards the chars so as to let the chars **1117** be moved back to the microwave assisted pyrolysis sector **1050.** As shown in Fig. **11(b)****,** the chars **1117** are forced by the gas flow **1121** to stay within the microwave assisted pyrolysis sector **1050.** If the inert gas is steam, a water gas shift reaction will occur. The **water-gas shift reaction** (WGS) is a chemical reaction where hot carbon reacts with water vapor to form carbon dioxide and hydrogen: C + H₂O → CO + H_{2.} The water-gas shift reaction is an important industrial reaction. It is often used in steam reforming of methane or other hydrocarbons. As a result, the chars **1117** could be transformed to pyrolysis gas (for example, CO and H₂) by the microwave assisted flash pyrolysis.

Fig. **11(c)** shows the internal structure of a second baffle plate **121** regarding gas tubes **1181, 1182** that are used to direct gas to the chamber **16,** or the microwave assisted pyrolysis sector **1050.**

As shown in Fig. **11(c)****,** a gas tube **1182** is disposed inside the second baffle plate **121** . The gas tube **1182** will direct inert gas from one end of the gas tube **1182** to a corresponding second gas inlet **1102.** Two arrows **1192, 1122** show the gas flow direction. Fig. **11(d)** shows a side view **94** of how inert gas injection related to a second gas inlet **1102** is operating in terms of what is described according to Fig. **11(c)****.**

As shown in Fig. **11(c)****,** inside a second baffle plate **121** is a gas tube **1181.** The gas tube **1181** will direct inert gas from one end of the gas tube **1181** to a corresponding first gas inlet **1101.** Two arrows **1191, 1121** show the gas flow direction. Fig. **11(d)** shows a side view **94** of how inert gas injection related to a first gas inlet **1101** is operating in terms of what is described according to Fig. **11(c)****.**

In some embodiments, both baffle plates **12, 121** have built-in nozzles radially that will flush the volume between these two baffle plates **12, 121** with inert gas (during the start-up of microwave assisted flash pyrolysis), or will recirculate non-condensable pyrolysis gas (after the start-up of microwave assisted flash pyrolysis) to further force the pyrolysis gas to vapor out of a chamber **16** as fast as possible.

The microwave-assisted flash pyrolysis system of the present invention could comprise a gas flow system **1278** for controlling gas flows, as shown in Figs. **9(c)** and **10****.** As mentioned above, the first baffle plate **12** and second baffle plate **121** have gas nozzles or gas tubes. The microwave-assisted flash pyrolysis system of the present invention provides a gas flow system **1278** to control the gas flow rates in those nozzles or tubes. Any commercial gas flow system could be applied to the present invention.

The gas injected into the pyrolysis sector might provide an effect on temperature control. But, the microwave-assisted flash pyrolysis system of the present invention could further have a cooling system for controlling a temperature of the chamber. Please refer to Fig. **1(c)****.** In some embodiments, the microwave-assisted flash pyrolysis system 1 comprises a cooling system **1974** to control a temperature of certain components or the chamber **16.**

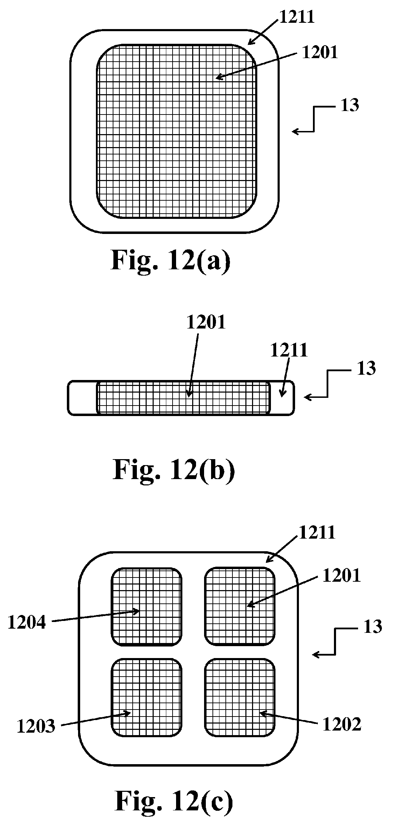

The present invention also provides more details about the structure of a tuning plate **13** as shown in Fig. **12 (a) to 12(c)****.** In one embodiment, Fig. **12(a)** is a top view of the tuning plate **13,** and Fig. **12(b)** is a side view of the tuning plate **13.** The tuning plate **13** has a single layer as shown in Fig. **12(b)****.**

As shown in Fig. **12(a)****,** a tuning plate **13** may have a ring **1211** and a catalyst mesh **1201.** The ring **1211** and the catalyst mesh **1201** can be separated. The ring **1211** and the catalyst mesh **1201** may be jointed mechanically together by some joint members. When the ring **1211** is separated from the catalyst mesh **1201,** a hole can be shown on the tuning plate **13.** In other words, the catalyst mesh **1201** is located in the hole of the tuning plate **13.**

As shown in Fig. **12(c)****,** a tuning plate **13** may have many catalyst meshes **1201, 1202 , 1203** and **1204.** So, the tuning plate **13** may have many holes, correspondingly.

'Catalyst mesh' means that a mesh that comprises catalyst materials. The catalyst materials can transform pyrolysis gas into carbon monoxide and hydrogen, meaning the gas flow that is leaving the chamber **16** will not comprise gases other than carbon monoxide and hydrogen. It should be noted that the leaving gas flow might still comprise gases other than carbon monoxide and hydrogen because the catalyst used might be aged, or poisoned, so as to reduce the efficiency of the pyrolysis gas transformation.

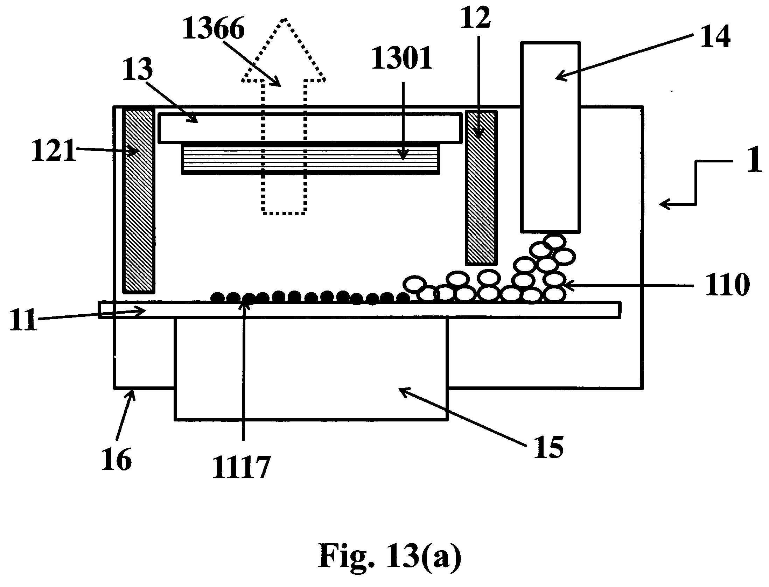

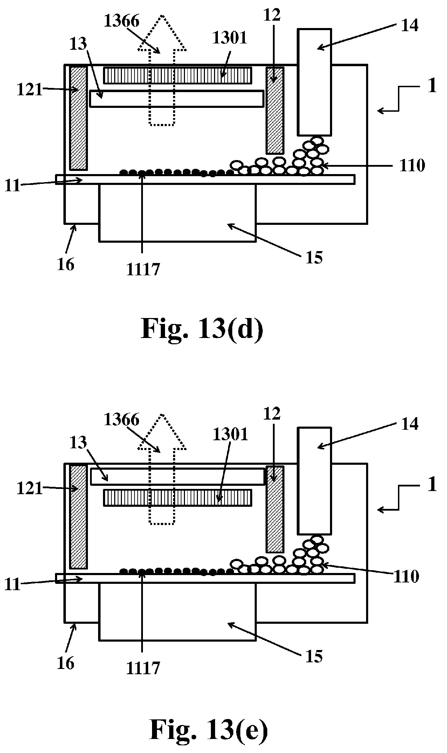

Alternatively, the present invention provides another structure related to a tuning plate **13.** As shown in Fig. **13(a)****,** a catalyst mesh **1301** is a separate device from a tuning plate **13.** The catalyst mesh **1301** is disposed over a microwave-transparent rotating window **11.** And, the catalyst mesh **1301** is disposed below the tuning plate **13**

As shown in Fig. **13(a)****,** the microwave-assisted flash pyrolysis system **1** could further comprise a catalytic mesh **1301** for further cracking chemical bonds and for separating chemical binding components in wet pyrolysis gas. The catalytic mesh **1301** is located on (Fig. **3(d)****),** fastened to (Fig. **3(a)****),** or located underneath (Fig. **3(e)****),** the tuning plate **13.** Please refer to Fig. **13(a)** again. The catalytic mesh **1301** is located above the microwave-transparent rotating window **11.**

As shown in Fig. **13(a)****,** pyrolysis gas will flow through the catalyst mesh **1301** and the tuning plate **13.** The flow direction is labeled as an arrow **1366.**

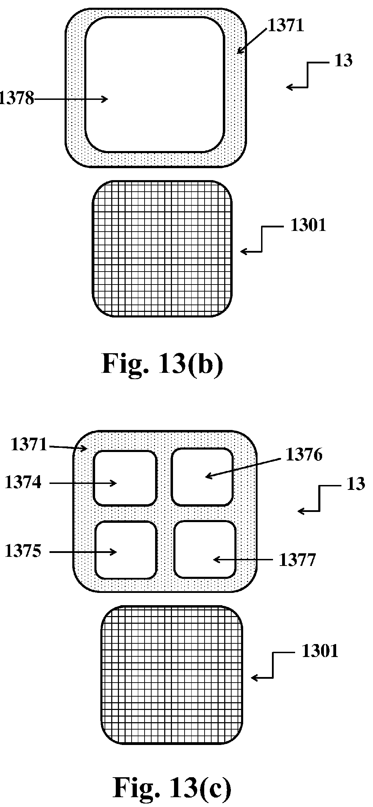

Fig. **13(b)** shows one sample of a catalyst mesh **1301** and one sample of a tuning plate **13.** A tuning plate **13** comprises a ring member **1371.** There is a hole **1378** on the tuning plate **13.** The catalyst mesh **1301** is a mesh located below the tuning plate **13.** Pyrolysis gas will pass through the catalyst mesh **1301** first, and then leave the chamber **16** through the hole **1378.**

Alternatively, there may be several holes **1374, 1375, 1376** and **1377** in a tuning plate **13** as shown in Fig. **13(c)****.**

The microwave-assisted flash pyrolysis system of the present invention further comprises a tuning plate **13** and an adjusting mechanism. The adjusting mechanism is automatically or manually operated. The tuning plate **13** is connected to the adjusting mechanism. Please refer to Fig. **1(a)** again. The tuning plate **13** is disposed between the microwave-transparent rotating window **11** and the wet gas outlet **192.**

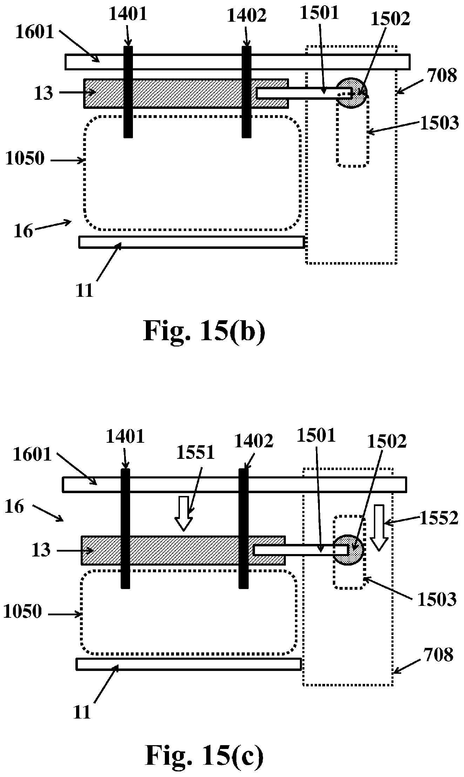

The tuning plate **13** is used for optimizing the pyrolysis sector and for securing maximum microwave energy to enter input feedstocks and to be absorbed by the input feedstocks. The tuning plate **13** is also used to minimize reflected power to microwave magnetron and to keep maximum energy efficiency in the pyrolysis sector **1050,** for example, as shown in Figs. **15(b)** and **15(c)****.**

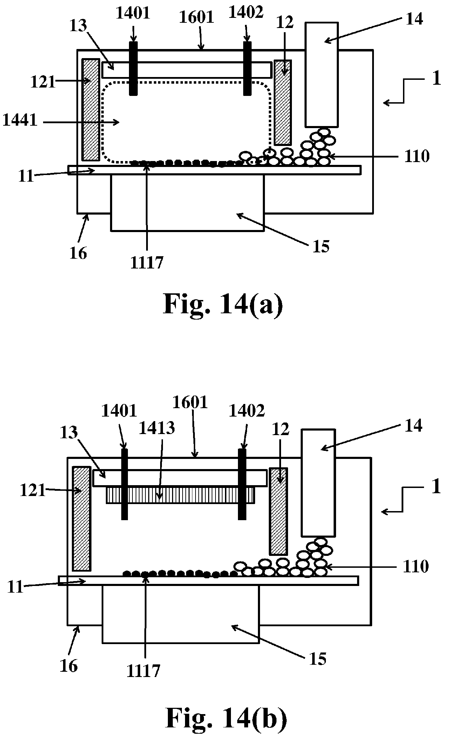

The present invention also provides another structural explanation about a tuning plate **13.** In some embodiments, the tuning plate **13** is fixed at one level as shown in Fig. **14(a)****.** The present invention provides an adjusting mechanism to fix a tuning plate 13 at one position. As shown in Fig. 14(a), at least one stick 1401, 1402 is provided to fix the position of a tuning plate 13. The stick 1401 (or, 1402) penetrates the tuning 1601 of the chamber 16, and is fixed to the tuning 1601. The stick 1401 (or, 1402) also penetrates the tuning plate 13, and is fixed to the tuning plate 13. By this adjusting mechanism, a tuning plate 13 is not movable during microwave pyrolysis.

As shown in Fig. 14(a), a non-movable tuning plate 13 creates a pyrolysis sector 1050 marked by a dashed line. 'Pyrolysis sector' means a region that contains microwave energy. Microwave energy is here limited to a specially designed region so as to tune, said at any time make the region as optimal as possible to continuously perform the microwave assisted flash pyrolysis most efficient.

Alternatively, Fig. **14(b)** shows another embodiment where a catalyst mesh **1413** is separate from a tuning plate **13.** Stick **1401** (or, **1402**) penetrates the catalyst mesh **1413,** and is fixed to the catalyst mesh **1413.** By this adjusting mechanism, a tuning plate **13** and catalyst mesh **1413** are not movable during microwave pyrolysis.

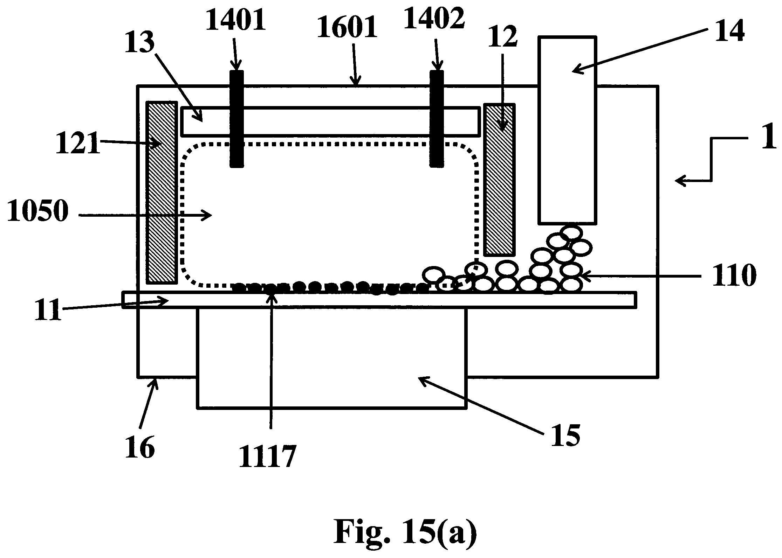

The present invention also provides another structural explanation about a tuning plate **13,** where the level of the tuning plate **13** can be changed to adjust the total volume and geometry to tune the specifications of the pyrolysis sector **1050** as shown in Fig. **15(a)****.**

As shown in Fig. **15(a)****,** one embodiment of a microwave assisted flash pyrolysis system of the present invention has a leveling mechanism as an adjusting mechanism. The leveling mechanism comprises at least one stick **1401** (or, **1402**)**,** and the stick **1401** (or, **1402**) is vertically disposed in a chamber **16.** The leveling mechanism is operating in a way that a tuning plate **13** is movable along the stick **1401** (or, **1402**)**.**

The movement of a tuning plate **13** along the stick **1401** (or, **1402**) can be carried out according to Fig. **15(b)****.** In Fig. **15(b)****,** a leveling mechanism comprises a leveling member **1501,** a roller **1502** and a track **1503.** The leveling member **1501** is inserted into a tuning plate **13.** The leveling member **1501** is fixed to the roller **1502.** The roller **1502** can move along the track **1503.** In addition, the track **1503** is located in the shaft **708** that is described in those statements related to the microwave-transparent rotating window mode of the present invention.

Figs. **15(b)** and **(c)** illustrate an operating scheme of one embodiment related to a leveling mechanism. A tuning plate **13** begins at one level, as shown in Fig. **15(b)****.** Then, a process moves the tuning plate **13** downward as follows. A roller **1502** moves downward along a track **1503.** Because a leveling member **1501** is fixed to the roller **1502,** the leveling member **1501** also moves downward. Consequently, the leveling member **1501** moves the tuning plate **13** downward.

Fig. **15(c)** shows the final position of the tuning plate **13** after the movement. The two arrows **1551, 1552** expresses the downward direction of the movement. The movement change the geometry and makes the volume of a pyrolysis sector **1050** smaller than what it **1050** was before the movement.

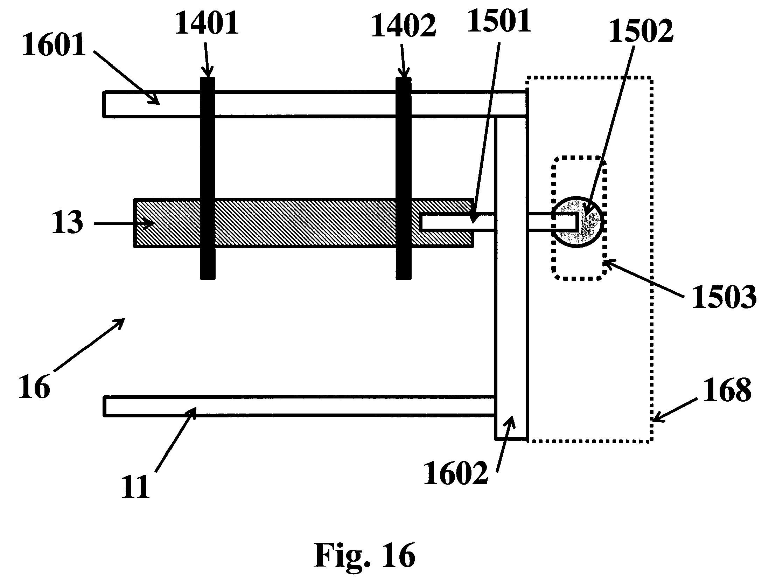

For some embodiments of the present invention, Fig. **16** shows another leveling mechanism as an adjusting mechanism. A chamber **16** has a baffle **1602.** The leveling mechanism of Fig. **16** comprises a leveling member **1501,** a roller **1502,** a track **1503** and a leveling machine **168.** The leveling member **1501** is inserted into a tuning plate **13.** The leveling member **1501** is fixed to the roller **1502.** The roller **1502** can move along the track **1503.** In addition, the track **1503** is located in the leveling machine **168.** The leveling machine **168** provides mechanical power to operate the roller **1502.**

Besides the leveling mechanisms described above, the basic design idea of a leveling mechanism is to let a tuning plate **13** move along a stick **1401** (or, **1402**). Any appropriate mechanical design for elevating something can be used to achieve the leveling mechanisms mentioned, or implied, in the description of the present invention.

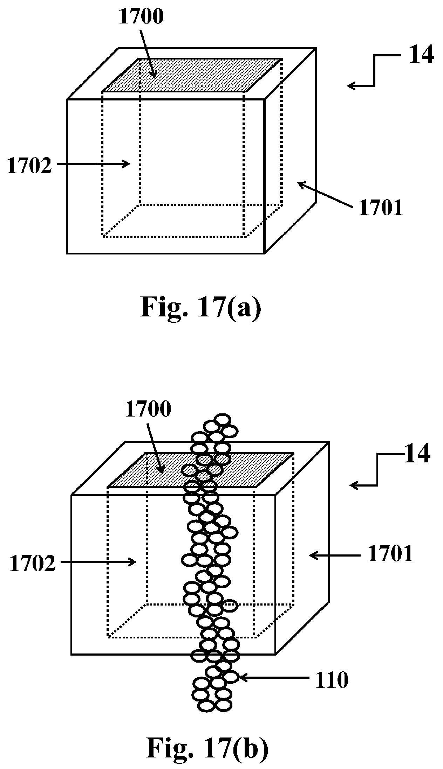

The present invention also provides more details about a feedstock inlet **14.** In Fig. **17(a)****,** a feedstock inlet **14** is presented. The feedstock inlet **14** has an outer portion **1701.** On the top surface of the feedstock inlet **14** is an opening **1700.** Below the opening **1700** is a tunnel **1702.** When microwave pyrolysis system of the present invention is operating, feedstock objects **110** are dropped on the opening **1700,** as shown in Fig. **17(b)****.** Then, the feedstock objects **110** will pass through the tunnel **1702** to reach the microwave-transparent rotating window **11.**

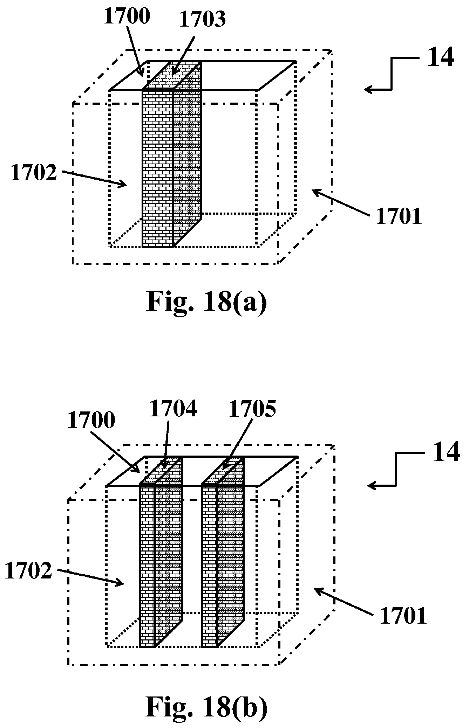

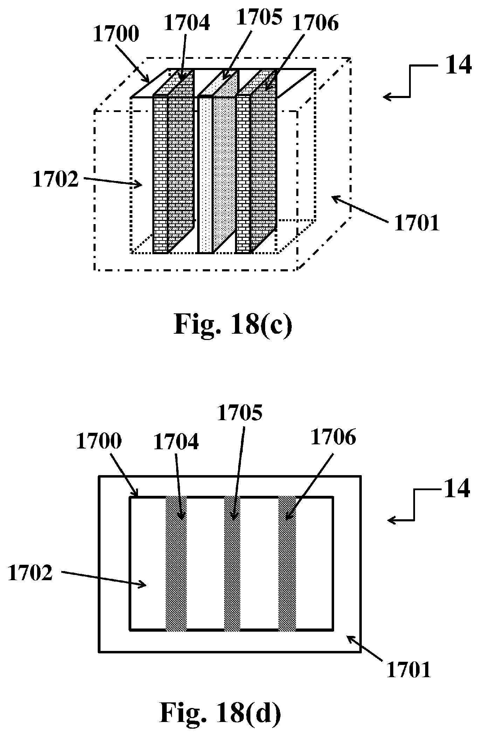

Alternatively, the present invention provides another design for a feedstock inlet **14.** Please refer to Figs. **18(a), 18(b)****,** **18(c) and 18(d)****.** The idea of this alternative design is to create a choke inside the tunnel **1702** of a feedstock inlet **14** shown in Fig. **17(a)****.**

As shown in Fig. **18(a)****,** a feedstock inlet **14** has an outer portion **1701.** On the topside of the feedstock inlet **14** is an opening **1700.** Inside the feedstock inlet **14** is a choke **1703.** Fig. **18(b)** shows another design related to a choke, where there are two sheets **1704, 1705.** Fig. **18(c)** shows another design related to a choke, where there are three sheets **1704, 1705** and **1706.** Fig. **18(d)** is the top view of the Fig. **18(c)** embodiment.

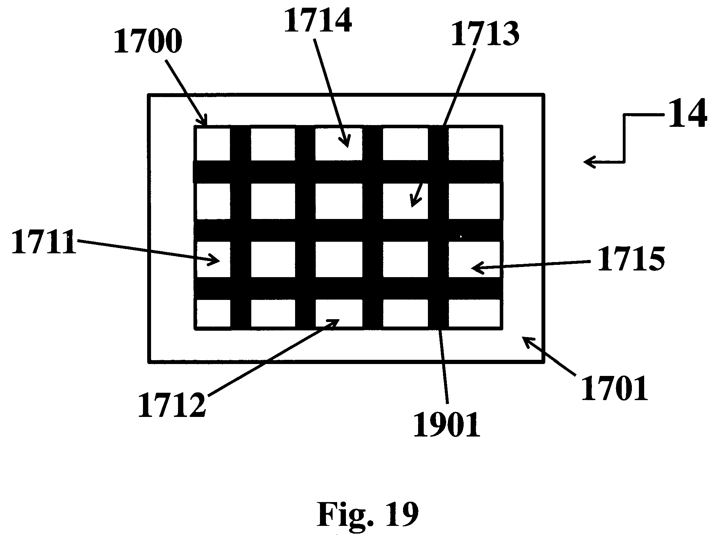

Alternatively, the present invention provides a grill-typed choke **1901** as shown in Fig. **19****.**

The design key of a choke used in any embodiments of the present invention is to reduce or prevent the leakage of microwave energy.

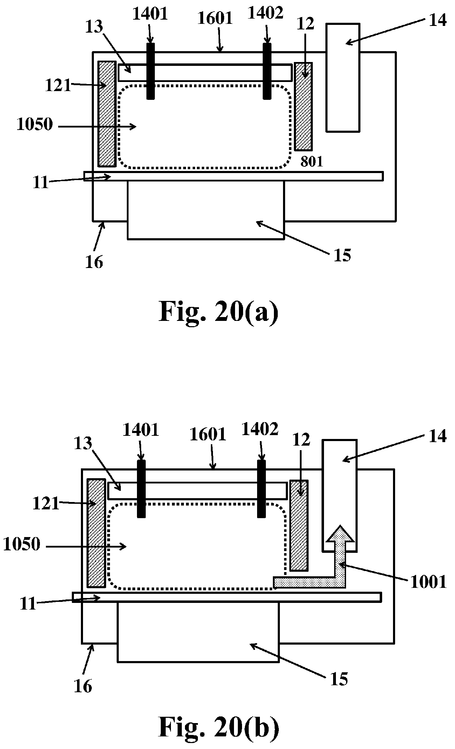

Fig. **20(a)** and **20(b)** illustrates the path of microwave energy leakage. As shown in Fig. **20(a)****,** there is a gap **801** under a first baffle plate **12.** The microwave could leak through the gap **801** to the feedstock inlet **14.** As shown in Fig. **20(b)****,** microwave follows a path to enter the feedstock inlet **14,** where the path is expressed as an arrow **1001.**

To prevent such leakage illustrated in Fig. **20(a)** and **20(b)****,** a feedstock inlet **14** needs a choke to keep microwave energy from leaving the pyrolysis sector **1050.**

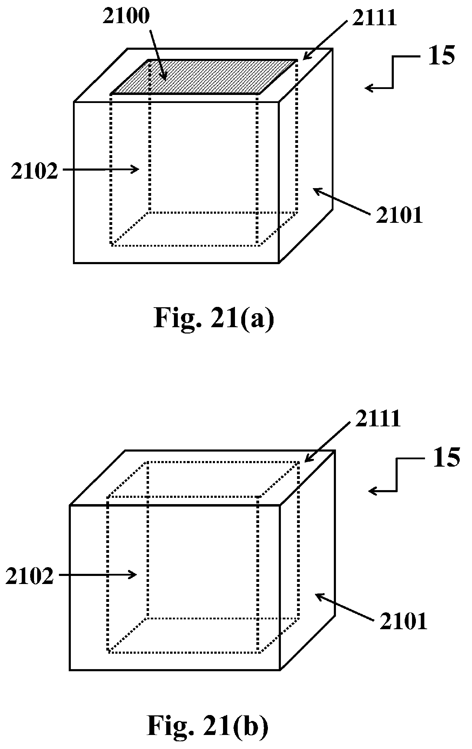

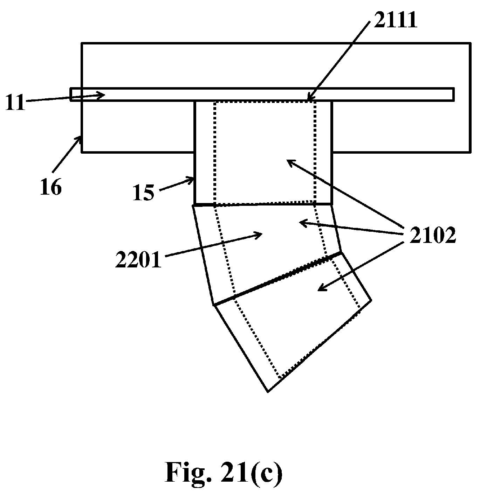

The present invention also provides more details about a microwave inlet **15.** As shown in Fig. **21(a)****,** a microwave inlet **15** has an outer portion **2101.** The top surface **2111** of the microwave inlet **15** could be attached to the microwave-transparent rotating window **11,** as shown in Fig. **21(c)****.** The top surface **2111** of the microwave inlet **15** could be unattached to but under the microwave-transparent rotating window **11.** On the top surface **2111** is an opening **2100** as shown in Fig. **21(a)****.** Alternatively, there is no opening on the top surface **2111** as shown in Fig. **21(b)****.**

As shown in Figs. **21(a)** and **21(b)****,** a microwave inlet **15** has a tunnel **2102** (expressed as a dashed line) that is used for a path of transmitting microwave energy. One end of the tunnel **2102** is adjacent to a microwave-transparent rotating window **11,** as shown in Fig. **21(c)****.**

The present invention also provides more details about a microwave inlet **15.** Figure **21(c)** shows that a tunnel **2102** of a microwave inlet **15** extends from the bottom of a microwave-transparent rotating window **11** and further from a chamber **16.** Microwave energy follows a path expressed as an arrow **2201** to enter a chamber **16.** The arrow **2201** shows that microwave energy can upward transmit into the chamber **16** through microwave inlet **15.**

There might be an embodiment where the microwaves are fed from the top of the pyrolysis sector, but also the gas was extracted from this side, meaning that there would always be a problem with vapours contaminating the waveguides and their quartz windows, leading to power being absorbed and heating up the windows to a point where they would be broken. Furthermore, the 'top' design inhibits gas extraction from the point where most of the gas was created (above the region of highest power density).

On the other hand, the solution provided by the present invention is to introduce the microwaves underneath the microwave-transparent rotating window, from the bottom of the pyrolysis sector. In this way, the microwave-transparent rotating window would act as the window, and we extract the produced wet pyrolysis gas right above the region where they are generated.

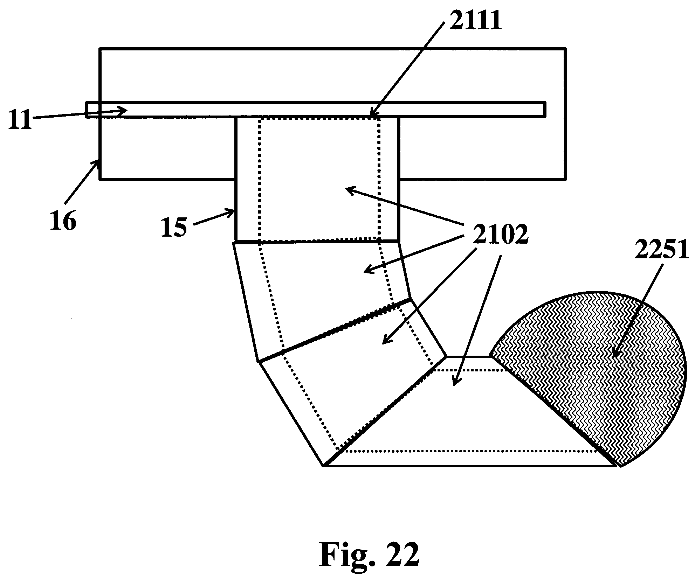

In any embodiment of the present invention, a microwave inlet **15** may further connect a microwave generator **2251** as shown in Fig. **22****.** The microwave generator **2251** may be a part of a microwave pyrolysis system of the present invention.

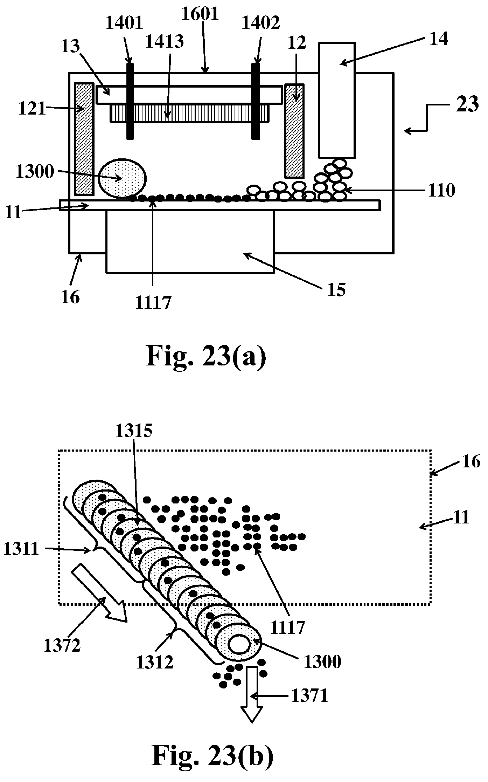

Chars **1117** (dry-end product) may be removed from the chamber **16** through a dry-end product outlet by different collecting mechanisms. In one embodiment, the dry-end product outlet is connected to the chamber **16** for collecting pyrolyzed dry-end product (Chars **1117**) from the microwave-transparent rotating window by an extractor **1300,** as shown in Figs. **23(a)** and **23(b)****.** An extractor **1300** is used to move solid objects like chars **1117.**

As shown in Fig. **23(a)****,** an extractor **1300** could be located next to a second baffle plate **121.** An extractor **1300** may be located near a microwave pyrolysis sector **1050.** But, an extractor **1300** may not be disposed between a first baffle plate **12** and a microwave pyrolysis sector **1050.**

The present invention also provides more details about an extractor **1300.** As shown in Fig. **23(b)****,** an extractor **1300** is divided into two sections. One section **1311** is located inside the chamber **16,** and the other section **1312** is located outside the chamber **16.**

The operation of an extractor **1300** is described as follows. Please refer to Fig. **23(b)****.** Once chars **1117** reach the extractor **1300,** the chars **1117** begin to be removed from the chamber **16.** The removal of the chars **111** begins by letting the chars **1117** enter into screws **1315** of the first section **1311** of the extractor **1300.** Then, the chars **1117** are conveyed by the screws **1315** and moved into the second section **1312.** The direction of the movement is expressed as an arrow **1372.**

Please refer to Fig. **23(b)** again. Once chars **1117** reach the end of the second section **1312,** the chars **1117** begin to drop out of the extractor **1300.** The direction of the dropping movement is expressed as an arrow **1371.**

Through an extractor **1300,** chars **1117** can be removed from the chamber **16.** However, it should be noted that an extractor **1300** is optional. Other particle-removing technology can be used to remove chars **111** from the chamber **16.**

The microwave-assisted flash pyrolysis system of the present invention could have more than one microwave-assisted flash pyrolysis sectors. Please refer to Fig. **24** that shows one industrial scale of microwave-assisted flash pyrolysis system **24.** The microwave-assisted flash pyrolysis system **24** comprises a microwave-transparent rotating window **2401,** a first baffle plate **2402,** a second baffle plate **2403,** a tuning plate **2404,** a feedstock inlet **2405,** a microwave inlet **2406** and a chamber **2407.** In addition, a microwave flash pyrolysis sector for the system **24** is above the microwave inlet **2406.**

Please refer to Fig. **24** again. A microwave-assisted flash pyrolysis system **24** may also have an extractor **2408.**

Fig. **24** provides a microwave-transparent rotating window type of a microwave-assisted flash pyrolysis system of the present invention. For that type of microwave-assisted flash pyrolysis system, a shaft **2409** is needed to be attached to a microwave-transparent rotating window **2401.** When the shaft **2409** is rotating, the microwave-transparent rotating window **2401** is rotating.

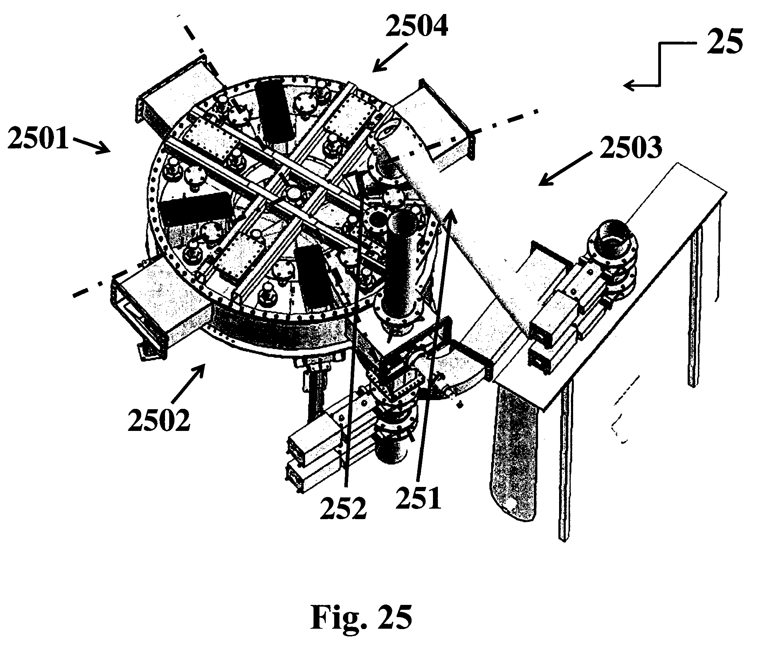

The present invention provides another embodiment **25** of a microwave-assisted flash pyrolysis system **25** as shown in Fig. **25****.** Four dash-dot lines define four sectors **2501, 2502, 2503** and **2504** of the microwave-assisted flash pyrolysis system **25.** The system **25** has one biomass conveyor **251** for transporting biomass objects to the system **25.** And, the feedstock objects will be injected into a feedstock inlet **252** that is part of the system **25.** Furthermore, in each sector **2501** (or, **2502, 2503, 2504**)**,** the layout of those basic elements of a microwave-assisted flash pyrolysis system can be the same as, or similar to, what is described above in accord with Figs. **1-24****.**

The present invention also provides another embodiment as shown in Fig. **26****.** A microwave-assisted flash pyrolysis system **26** has four biomass conveyors **2601, 2602, 2603** and **2604.** As shown in Fig. **26****,** four dash-dot lines define four sectors **2611, 2612 , 2613** and **2614** of the microwave-assisted flash pyrolysis system **26.** In each sector **2611** (or, **2612, 2613, 2614**)**,** the layout of those basic elements of a microwave-assisted flash pyrolysis system can be the same as, or similar to, what is described above in accord with Figs. **1-24****.**

Finally, the present invention provides a method for flash-pyrolyzing a feedstock by using a microwave assisted pyrolysis system as mentioned above. The method comprises:
(a) introducing a feedstock through a feedstock inlet into a chamber;
(b) letting a microwave-transparent rotating window to move the feedstock through a gap into a pyrolysis sector; wherein said gap is disposed between the first baffle plate and microwave-transparent rotating window;
(c) pyrolyzing the feedstock by an upward direction of microwave energy through the microwave-transparent rotating window coming from a microwave inlet, wherein a wet pyrolysis gas and a pyrolyzed dry-end product will be produced by a flash pyrolysis process;
(d) collecting the wet pyrolysis gas by a gas collection unit through a wet gas outlet; and
(e) transporting the pyrolyzed dry-end product to a dry-end product outlet; wherein the pyrolyzed dry-end product is transported out of the chamber.

The relevant statements about steps (a)-(e) have been mentioned above when the description is talking about how one corresponding part of the microwave-assisted flash pyrolysis system of the present invention is operating.

The advantage of the present invention is that because a microwave inlet is disposed below a microwave-transparent rotating window and the microwaves is transmitted through the bottom side of the microwave-transparent rotating window, a better microwave energy zone can be well formed above the microwave-transparent rotating window. A more concentrated and better microwave energy zone can provide more powerful microwave energy, so the microwave assisted flash pyrolysis can be well carried out in the present invention.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A microwave-assisted flash pyrolysis system, comprising:
at least one microwave generator connected to a chamber;
wherein the chamber comprises: at least one feedstock inlet, at least one first baffle plate, a microwave-transparent rotating window, and at least one microwave inlet, at least one wet gas outlet, and at least one dry-end product outlet;
wherein the feedstock inlet for introducing feedstocks to the microwave-transparent rotating window is disposed over the microwave-transparent rotating window and in front of the first baffle plate;
wherein the first baffle plate is used for leveling out the feedstocks on the microwave-transparent rotating window and separating the chamber into different pyrolysis sectors in which flash pyrolysis is to take place;
wherein the first baffle plate is disposed over the microwave-transparent rotating window, and there is a gap between the first baffle plate and microwave-transparent rotating window; wherein the height of the gap is adjustable and used for determining the thickness of input feedstocks;
wherein the microwave-transparent rotating window moves the input feedstocks through the gap and into the pyrolysis sector;
wherein the pyrolysis sector is disposed over the microwave inlet;
wherein the microwave inlet is connected to the microwave generator for introducing microwave energy upward into the pyrolysis sector that is disposed over the microwave-transparent rotating window and limiting the microwave energy between the first baffle plate and the dry-end product outlet;
wherein the wet gas outlet is connected to a gas collection unit for collecting wet gas from the pyrolysis sector, and the wet gas outlet is disposed over the microwave-transparent rotating window;
wherein the dry-end product outlet is connected to the chamber for collecting pyrolyzed dry-end products from the microwave-transparent rotating window.

2. The microwave-assisted flash pyrolysis system as claimed in claim 1,
wherein the microwave-transparent rotating window comprises one layer or more than one layers of different materials.

3. The microwave-assisted flash pyrolysis system as claimed in claim 1,
the microwave-transparent rotating window is used for carrying the input feedstocks.

4. The microwave-assisted flash pyrolysis system as claimed in claim 2,
further comprising a shaft, wherein the shaft is disposed on a center of the microwave-transparent rotating window.

5. The microwave-assisted flash pyrolysis system as claimed in claim 3,
further comprising a rotating mechanism, wherein the rotating mechanism enables the microwave-transparent rotating window to rotate.

6. The microwave-assisted flash pyrolysis system as claimed in claim 1,
further comprising a microwave-transparent plate that is resistant to thermal shock; wherein the microwave-transparent plate is disposed on the microwave-transparent rotating window.

7. The microwave-assisted flash pyrolysis system as claimed in claim 1,
further comprising a second baffle plate for further defining the pyrolysis sector together with the first baffle plate; wherein the second baffle plate is disposed over the microwave-transparent rotating window.

8. The microwave-assisted flash pyrolysis system as claimed in claim 7,
wherein the first baffle plate and second baffle plate further comprise at least one gas nozzle for introducing inert gases.

9. The microwave-assisted flash pyrolysis system as claimed in claim 1,
further comprising a tuning plate and an adjusting mechanism that is automatically or manually operated; wherein the tuning plate is connected to the adjusting mechanism and is disposed between the microwave-transparent rotating window and the wet gas outlet; wherein the tuning plate is used for optimizing the pyrolysis sector and for securing maximum microwave energy to enter the input feedstocks and to be absorbed by the input feedstocks; wherein the tuning plate is used to minimize reflected power to microwave magnetron and to keep maximum energy efficiency in the pyrolysis sector.

10. The microwave-assisted flash pyrolysis system as claimed in claim 9,
further comprising a catalytic mesh for further cracking chemical bonds and for separating chemical binding components in wet pyrolysis gas; wherein the catalytic mesh is located on, fastened to, or located underneath, the tuning plate, and above the microwave-transparent rotating window.

11. The microwave-assisted flash pyrolysis system as claimed in claim 1,
further comprising a gas flow system for controlling gas flows and a cooling system for controlling a temperature of the chamber.

12. The microwave-assisted flash pyrolysis system as claimed in claim 1,
wherein the atmosphere inside the chamber consists of an inert atmosphere, and where oxygen is kept out and no oxygen is added to the chamber.

13. A method for flash-pyrolyzing a feedstock by using a microwave
assisted pyrolysis system as claimed in claim 1, comprising:
introducing a feedstock through a feedstock inlet into a chamber;
letting a microwave-transparent rotating window to move the feedstock through a gap into a pyrolysis sector; wherein said gap is disposed between the first baffle plate and microwave-transparent rotating window;
pyrolyzing the feedstock by an upward direction of microwave energy through the microwave-transparent rotating window coming from a microwave inlet, wherein a wet pyrolysis gas and a pyrolyzed dry-end product will be produced by a flash pyrolysis process;
collecting the wet pyrolysis gas by a gas collection unit through a wet gas outlet; and
transporting the pyrolyzed dry-end product to a dry-end product outlet;
wherein the pyrolyzed dry-end product is transported out of the chamber.

## Patentansprüche

1. Mikrowellenunterstütztes Flash-Pyrolyse-System, das folgendes umfasst:
mindestens einen Mikrowellengenerator, der mit einer Kammer verbunden ist;
worin die Kammer umfasst: mindestens einen Rohmaterialeinlass, mindestens eine erste Trennplatte, ein für Mikrowellen transparentes Drehfenster und mindestens einen Mikrowelleneinlass, mindestens einen Feuchtgasauslass und mindestens einen Produktauslass für den Trockenbereich;
worin der Rohmaterialeinlass zum Zuführen von Rohmaterial auf das für Mikrowellen transparente Drehfenster über dem für Mikrowellen transparenten Drehfenster und vor der ersten Trennplatte angeordnet ist;
worin die erste Trennplatte verwendet wird zur gleichmäßigen Verteilung der Rohmaterialien auf dem für Mikrowellen transparenten Drehfenster und zum Aufteilen der Kammer in verschiedene Pyrolysebereiche, in denen Flash-Pyrolyse stattfinden soll; worin die erste Trennplatte über dem für Mikrowellen transparenten Drehfenster angeordnet ist und sich ein Spalt zwischen der ersten Trennplatte und dem für Mikrowellen transparenten Drehfenster befindet; worin die Höhe des Spalts verstellbar und zur Bestimmung der Stärke des zugeführten Rohmaterials verwendbar ist; worin das für Mikrowellen transparente Drehfenster das zugeführte Rohmaterial durch den Spalt und in den Pyrolysebereich bewegt;
worin der Pyrolysebereich über dem Mikrowelleneinlass angeordnet ist;
worin der Mikrowelleneinlass mit dem Mikrowellengenerator verbunden ist, um die Mikrowellenenergie aufwärts in den Pyrolysebereich einzuleiten, der über dem für Mikrowellen transparenten Drehfenster angeordnet ist und die Mikrowellenenergie zwischen der ersten Trennplatte und dem Produktauslass des Trockenbereichs einschränkt;
worin der Feuchtgasauslass mit einer Gassammeleinheit zum Sammeln des Feuchtgases aus dem Pyrolysebereich verbunden ist, und der Feuchtgasauslass über dem für Mikrowellen transparenten Drehfenster angeordnet ist;
worin der Produktauslass des Trockenbereichs mit der Kammer zum Sammeln des Produkts des Trockenbereichs vom für Mikrowellen transparenten Drehfenster verbunden ist.

2. Mikrowellenunterstütztes Flash-Pyrolyse-System nach Anspruch 1,
worin das für Mikrowellen transparente Drehfenster eine Schicht oder mehr als eine Schicht verschiedener Materialien umfasst.

3. Mikrowellenunterstütztes Flash-Pyrolyse-System nach Anspruch 1,
worin das für Mikrowellen transparente Drehfenster dazu verwendet wird, das zugeführte Rohmaterial zu tragen.

4. Mikrowellenunterstütztes Flash-Pyrolyse-System nach Anspruch 2, das außerdem eine Welle umfasst,
worin die Welle an einem Zentrum des für Mikrowellen transparenten Drehfensters angeordnet ist.

5. Mikrowellenunterstütztes Flash-Pyrolyse-System nach Anspruch 3, das außerdem einen Drehmechanismus umfasst, worin der Drehmechanismus die Drehung des für Mikrowellen transparenten Drehfensters ermöglicht.

6. Mikrowellenunterstütztes Flash-Pyrolyse-System nach Anspruch 1, das außerdem eine für Mikrowellen transparente Platte umfasst, die wärmeschockbeständig ist; worin die für Mikrowellen transparente Platte auf dem für Mikrowellen transparenten Drehfenster angeordnet ist.

7. Mikrowellenunterstütztes Flash-Pyrolyse-System nach Anspruch 1, das außerdem eine zweite Trennplatte umfasst, um den Pyrolysebereich zusammen mit der ersten Trennplatte weiter zu definieren; worin die zweite Trennplatte über dem für Mikrowellen transparenten Drehfenster angeordnet ist.

8. Mikrowellenunterstütztes Flash-Pyrolyse-System nach Anspruch 7, worin die erste Trennplatte und die zweite Trennplatte außerdem mindestens eine Gasdüse zum Einleiten von Schutzgasen umfasst.

9. Mikrowellenunterstütztes Flash-Pyrolyse-System nach Anspruch 1, das außerdem eine Abstimmungsplatte und einen Verstellmechanismus umfasst, der automatisch oder manuell betrieben werden kann; worin die Abstimmungsplatte mit dem Verstellmechanismus verbunden und zwischen dem für Mikrowellen transparenten Drehfenster und dem Feuchtgasauslass angeordnet ist; worin die Abstimmungsplatte zur Optimierung des Pyrolysebereichs verwendet wird und dazu, sicherzustellen, dass die maximale Mikrowellenenergie in die zugeführten Rohmaterialien eintritt und von den zugeführten Rohmaterialien aufgenommen wird; worin die Abstimmungsplatte dazu verwendet wird, die Reflektion der Energie zum Mikrowellen-Magnetron zu minimieren und die maximale Energieeffizienz im Pyrolysebereich aufrechtzuerhalten.

10. Mikrowellenunterstütztes Flash-Pyrolyse-System nach Anspruch 9, das außerdem ein katalytisches Gewebe zum weiteren Aufbrechen chemischer Verbindungen und zum Trennen chemischer Bindungskomponenten in feuchtem Pyrolysegas umfasst; worin das katalytische Gewebe auf der Abstimmungsplatte sitzt, an dieser angebracht ist oder unter dieser sitzt und über dem für Mikrowellen transparenten Drehfenster.

11. Mikrowellenunterstütztes Flash-Pyrolyse-System nach Anspruch 1, das außerdem ein Gasflusssystem zur Steuerung der Gasflüsse und ein Kühlsystem zur Steuerung einer Temperatur der Kammer umfasst.

12. Mikrowellenunterstütztes Flash-Pyrolyse-System nach Anspruch 1, worin die Atmosphäre innerhalb der Kammer aus einer Schutzgasatmosphäre besteht und diese von Sauerstoff freigehalten wird und der Kammer kein Sauerstoff zugeführt wird.

13. Verfahren zur Flash-Pyrolyse eines Rohmaterials durch Verwendung eines mikrowellenunterstützten Flash-Pyrolyse-Systems nach Anspruch 1, das folgendes umfasst:
Einführen eines Rohmaterials durch einen Rohmaterialeinlass in eine Kammer;
Veranlassen eines für Mikrowellen transparenten Drehfensters, das Rohmaterial durch einen Spalt in einen Pyrolysebereich zu bewegen; worin der Spalt zwischen der ersten Trennplatte und dem für Mikrowellen transparenten Drehfenster angeordnet ist;
Pyrolyse des Rohmaterials durch nach oben richten von Mikrowellenenergie durch das für Mikrowellen transparente Drehfenster ausgehend von einem Mikrowelleneinlass, worin ein feuchtes Pyrolysegas und ein Pyrolyseprodukt des Trockenbereichs durch einen Flash-Pyrolyseprozess hergestellt werden;
Sammeln des nassen Pyrolysegases durch eine Gassammeleinheit über einen Feuchtgasauslass;
Transportieren des Pyrolyseprodukts des Trockenbereichs zu einem Produktauslass des Trockenbereichs;
worin das Pyrolyseprodukt des Trockenbereichs aus der Kammer heraustransportiert wird.

## Revendications

1. Système de pyrolyse éclair assistée par micro-ondes, comprenant:
au moins un générateur de micro-ondes relié à une chambre;
la chambre comprenant : au moins une entrée de matière première, au moins un premier déflecteur, une fenêtre rotative transparente aux micro-ondes, et au moins une entrée de micro-ondes, au moins une sortie de gaz humide, et au moins une sortie de produit de bout sec ;
l'entrée de matière première pour introduire des matières premières dans la fenêtre rotative transparente aux micro-ondes étant disposée au-dessus de la fenêtre rotative transparente aux micro-ondes et devant le premier déflecteur ;
le premier déflecteur étant utilisé pour niveler les matières premières sur la fenêtre rotative transparente aux micro-ondes et séparer la chambre en différents secteurs de pyrolyse dans lesquels une pyrolyse éclair doit avoir lieu ;
le premier déflecteur étant disposé au-dessus de la fenêtre rotative transparente aux micro-ondes, et il y a un intervalle entre le premier déflecteur et la fenêtre rotative transparente aux micro-ondes, la hauteur de l'intervalle étant ajustable et utilisée pour déterminer l'épaisseur de matières premières en entrée ;
la fenêtre rotative transparente aux micro-ondes déplaçant les matières premières en entrée à travers l'intervalle et dans le secteur de pyrolyse ;
le secteur de pyrolyse étant disposé au-dessus de l'entrée de micro-ondes ;
l'entrée de micro-ondes étant reliée au générateur de micro-ondes pour introduire de l'énergie micro-ondes vers le haut dans le secteur de pyrolyse qui est disposé au-dessus de la fenêtre rotative transparente aux micro-ondes et limiter l'énergie micro-ondes entre le premier déflecteur et la sortie de produit de bout sec ;
la sortie de gaz humide étant reliée à une unité de collecte de gaz pour collecter du gaz humide à partir du secteur de pyrolyse, et la sortie de gaz humide étant disposée au-dessus de la fenêtre rotative transparente aux micro-ondes ;
la sortie de produit de bout sec étant reliée à la chambre pour collecter les produits de bout sec pyrolysés à partir de la fenêtre rotative transparente aux micro-ondes.

2. Système de pyrolyse éclair assistée par micro-ondes selon la revendication 1, dans lequel la fenêtre rotative transparente aux micro-ondes comprend une couche ou plus d'une couche de matériaux différents.

3. Système de pyrolyse éclair assistée par micro-ondes selon la revendication 1, dans lequel la fenêtre rotative transparente aux micro-ondes est utilisée pour transporter les matières premières d'entrée.

4. Système de pyrolyse éclair assistée par micro-ondes selon la revendication 2, comprenant en outre un arbre, l'arbre étant disposé sur un centre de la fenêtre rotative transparente aux micro-ondes.

5. Système de pyrolyse éclair assistée par micro-ondes selon la revendication 3, comprenant en outre un mécanisme de rotation, le mécanisme de rotation permettant à la fenêtre rotative transparente aux micro-ondes de tourner.

6. Système de pyrolyse éclair assistée par micro-ondes selon la revendication 1, comprenant en outre une plaque transparente aux micro-ondes qui est résistante au choc thermique, la plaque transparente aux micro-ondes étant disposée sur la fenêtre rotative transparente aux micro-ondes.

7. Système de pyrolyse éclair assistée par micro-ondes selon la revendication 1, comprenant en outre un second déflecteur pour définir encore le secteur de pyrolyse conjointement avec le premier déflecteur, le second déflecteur étant disposé au-dessus de la fenêtre rotative transparente aux micro-ondes.

8. Système de pyrolyse éclair assistée par micro-ondes selon la revendication 7, dans lequel le premier déflecteur et le second déflecteur comprennent en outre au moins une buse de gaz pour introduire des gaz inertes.

9. Système de pyrolyse éclair assistée par micro-ondes selon la revendication 1, comprenant en outre une plaque de réglage et un mécanisme d'ajustement qui est actionné automatiquement ou manuellement, la plaque de réglage étant reliée au mécanisme d'ajustement et étant disposée entre la fenêtre rotative transparente aux micro-ondes et la sortie de gaz humide, la plaque de réglage étant utilisée pour optimiser le secteur de pyrolyse et pour garantir que l'énergie micro-ondes maximale entre dans les matières premières en entrée et soit absorbée par les matières premières d'entrée, la plaque de réglage étant utilisée pour rendre minimale la puissance réfléchie par un magnétron à micro-ondes et pour maintenir une efficacité énergétique maximale dans le secteur de pyrolyse.

10. Système de pyrolyse éclair assistée par micro-ondes selon la revendication 9, comprenant en outre une maille catalytique pour craquer encore des liaisons chimiques et pour séparer des composants de liaison chimique dans un gaz de pyrolyse humide, la maille catalytique étant située sur, fixée à, ou située sous, la plaque de réglage, et au-dessus de la fenêtre rotative transparente aux micro-ondes.

11. Système de pyrolyse éclair assistée par micro-ondes selon la revendication 1, comprenant en outre un système d'écoulement de gaz pour contrôler les écoulements de gaz et un système de refroidissement pour contrôler une température de la chambre.

12. Système de pyrolyse éclair assistée par micro-ondes selon la revendication 1, dans lequel l'atmosphère à l'intérieur de la chambre consiste en une atmosphère inerte, et où l'oxygène est maintenu à l'extérieur et il n'est pas ajouté d'oxygène dans la chambre.

13. Procédé pour la pyrolyse éclair d'une matière première à l'aide d'un système de pyrolyse assistée par micro-ondes selon la revendication 1, comprenant:
introduire une matière première à travers une entrée de matière première dans une chambre ;
amener une fenêtre rotative transparente aux micro-ondes à déplacer la matière première à travers un intervalle dans un secteur de pyrolyse, ledit intervalle étant disposé entre le premier déflecteur et la fenêtre rotative transparente aux micro-ondes ;
pyrolyser la matière première en dirigeant vers le haut une énergie micro-ondes à travers la fenêtre rotative transparente aux micro-ondes, venant d'une entrée de micro-ondes, un gaz de pyrolyse humide et un produit de bout sec pyrolysé étant produits par un procédé de pyrolyse éclair ;
collecter le gaz de pyrolyse humide par une unité de collecte de gaz à travers une sortie de gaz humide ; et
transporter le produit de bout sec pyrolysé jusqu'à une sortie de produit de bout sec, le produit de bout sec pyrolysé étant transporté hors de la chambre.
